# EUROPEAN PATENT APPLICATION

(11) **EP 4 187 165 A1**
(43) Date of publication of application: **31.05.2023**
(21) Application number: 21383063.1
(22) Date of filing: 24.11.2021
(51) Int. Cl.: F24F 3/163, G10K 11/178, G10K 11/168, A47B 97/00

(54) **WORKSPACE WALL, AIR PURIFYING DEVICE, AND DESKTOP SYSTEM**

(71) Applicant: WOAS SA, 1009 Pully (CH)
(72) Inventor: LACOUR-GAYET, Julien, 1090 Lacroix-sur-Lutry (CH); SCHLOTTERBECK, Marcel, 1009 Pully (CH); MCELDOWNEY, Blake Ramsay, 08395 Barcelona (ES); MORENO MEDINA, Jaime Tomas, 28002 Madrid (ES); GARCIA GARCÍA, Diego, 28035 Madrid (ES); SORIANO BLANCO, Juan, 28045 Madrid (ES); KUKORELLI, Peter, 08037 Barcelona (ES); ROQUERO MENDIOLA, Alejandro, San Sebastian, Guipúzcoa (ES); FERNÁNDEZ DE TRÓCONIZ CRESPO, Carlos, 28003 Madrid (ES); OCAMPO JORDÁN, Mauricio Iván, 28942 Madrid (ES); GALA SAN ROMAN FUENTES, Barbara, 28220 Madrid (ES); WAGENAARS, Wilhelmus Maria, 3400 Landen (BE); VATER, Analena, 3000 Leuven (BE)
(74) Representative: Hepp Wenger Ryffel AG

(57) **Abstract**

The invention relates to a workspace wall (1) for placement on a desk to reduce noise within a noise reduction area (7) in an operating orientation (11). The workspace wall (1) comprises a main wall element (3), at least one wing panel (4), optionally at least one sound detection element (21) for detecting a sound signal input (12), and at least one sound generating device (22), preferably for active noise reduction and/or a passive noise reduction element (20). The at least one sound generating device (22) and/or the passive noise reduction element (20) is configured to reduce the level of noise within the noise reduction area (7).

## Description

The invention relates to a workspace wall for placement on a desk to reduce noise within a noise reduction area in an operating orientation, an air purifying device and a desktop system comprising an air purifying device and a workspace wall.

The limited supply of affordable office space, especially in urban areas, means that many people have to work together in a small space. A high noise level and different noise sources make it harder to filter out important information in exchanges with other employees and/or electronic communication. In addition, a high noise level can impair the ability to concentrate in the workplace, which can negatively impact the productivity.

Another problem arises from poor air quality either caused by environmental factors, such as industrial fumes, smog, and/or traffic, or workspace conditions with increased pollutant, allergen, and/or pathogen concentrations within the workspace.

Airborne contagious diseases, for example, can easily spread when many people stay in a confined space for a long time, such as in open-plan offices.

US 2017/061951 A1 discloses a system and method for quieting unwanted sound by generating a "cancellation signal" which destructively interferes with an unwanted sound source at the user's ear.

US 3 804 942 A discloses an all-round air purifier that efficiently supplies a purified air devoid of all obnoxious, harmful and odorous pollutants through a synergistic effect of a combination of a group of various filters.

However, workspaces often times require collaborative communication with other employees which is essential during execution of certain tasks. When executing different tasks it would be desirable to reduce the noise level, especially in the sitting position directly in front of the workspace desk.

Furthermore, in the prior art air purifying systems are often times directed at whole office workspaces and not optimized for fresh air circulation for a single person, especially not a single person at a confined workspace.

It is an object of the present invention to overcome these and other disadvantages of the prior art.

This object is solved by a workspace wall for placement on a desk to reduce noise within a noise reduction area in an operating orientation.

The workspace wall comprises a main wall element, at least one wing panel, optionally at least one sound detection element, in particular a microphone, for detecting a sound signal input, and at least one sound generating device, preferably for active noise reduction, and/or a passive noise reduction element. The workspace wall is characterized in that the at least one sound generating device and/or the passive noise reduction element is configured to reduce the level of noise within the noise reduction area.

The workspace wall can have a base. The operating orientation of the workspace wall is defined by the base preferably completely contacting a surface, in particular a desk surface.

In the operating orientation, the workspace wall, in particular the main wall element and wing panel can have an at least partially oval, circular or polygonal base which at least partially surrounds the noise reduction area.

The workspace wall can be portable, in particular can be manually portable by a single person, so that it can be easily attached to other desks or stowed away. The workspace wall can in particular be reversibly convertible from a stowage orientation and the operating orientation, wherein the stowage configuration has a reduced extension in at least one dimension.

The at least one wing panel can comprise at least one of the following:
- at least one foldable portion such that the wing panel is convertible between an expanded configuration and a folded configuration;
- a connecting element such that the wing panel is connectable to the main wall element.

The foldable portions of the wing panel of the workspace wall in the operating orientation can be arranged essentially vertically. The wing panel of the workspace in the operating orientation can optionally be folded in a horizontal plane. The contact area of the base surface of the workspace wall with the desk surface can stay constant when folded.

In the expanded configuration of the wing panel, can preferably spatially separate sections of a table or office from an adjacent workspace by at least partially enclosing a workspace. In the folded configuration partial enclosure of the workspace can be opened at the lateral sides of the workspace.

The main wall element can also comprise foldable portions.

The workspace wall can comprise sections consisting of a semi-transparent or transparent material.

In an alternative embodiment the workspace wall in the operating orientation comprises foldable portions which extend essentially horizontally. The workspace wall can be convertible from the operating orientation to an open orientation by folding the workspace wall at least partially at horizontal folding portions such that the vertical height of the workspace wall can be decreased.

The main wall element can face toward the noise reduction area in the operating orientation and at least one wing panel can be arrangeable at a second horizontal direction at an angle to a first horizontal direction of the main wall element. The angle can be preferably in a range from 20° to 120°, in particular preferably 80° to 100°, such that the noise reduction area can be at least partially surrounded by the workspace wall.

The workspace wall can comprise a front panel which is connected or connectable to the main wall element facing the noise reduction area forming a spacing between the main wall element and the front panel.

The main wall element and the front panel can be arranged essentially parallel to each other in the operating orientation.

The workspace wall can comprise a top panel which is connected or connectable to a top section of the main wall element and/or the front panel, preferably at an angle relative to the main wall element and/or the front panel. The top panel can optionally have a light source facing away from a surface of the top panel.

The light source can be arranged in a recess of the top panel so that it forms a flat surface with the surface facing away from the top panel.

The light source can be positioned along a section or the complete surface of the top panel.

The light source can comprise a diffusing element to uniformly disperse the light passing through it.

The top panel can be convertible between a closed state inclined towards the noise reduction area and an open state inclined away from the noise reduction area, in particular in an angular range of -90° to 90°, in particular preferably -70° to 70°, inclination of the top panel relative to an axis of the main wall element.

The workspace wall in the operating orientation can have
- a height, as measured in the vertical direction, in the range from 30 cm to 300 cm, in particular 50 cm to 150 cm, in particular preferably 50 cm to 70 cm;
- a width, measured from a left side to a right side, in the range from 90 cm to 800 cm, in particular 120 cm to 250 cm, in particular preferably 120 cm to 180 cm;
- a depth, measured in a direction perpendicular to the height and the width, in the range from 30 cm to 110 cm, in particular 60 cm to 80 cm.

The workspace wall can be arranged to at least partially enclose at least one person, in particular multiple persons.

The workspace wall can have at least one sound generating device which has a minimum thickness of 10 mm, in particular 20 mm.

The sound generating device can be inlayed within a recess of the workspace wall.

The passive noise reduction element can be a noise reduction layer which is arranged along at least a part of a surface of the workspace wall or the entire surface of the workspace wall. The noise reduction element can preferably consist of or comprise polyethylene and/or can have a thickness of 8 mm to 30 mm, in particular 12 mm to 20 mm, in particular preferably 19 mm.

The passive noise reduction element can consist of or comprise multiple noise reduction layers or layered sections.

The noise reduction element can comprise or consist of recycled polyethylene to minimize costs. The noise reduction element may be enclosed in a fabric upholstery.

The noise reduction element and/or the fabric upholstery can also comprise or consist of mineral wool, polyester, melamine foam, and polyurethane.

The noise reduction element and/or the fabric upholstery can comprise a three-dimensional structure, in particular a spatially periodic pyramidal and/or studded structure.

In an operating orientation the workspace wall can reduce the noise within the noise reduction area at a frequency of 2 kHz by at least 7.5 dB, in particular at least 10 dB as compared to a space outside the noise reduction area at least partially surrounded by the workspace wall.

The sound detection element can be oriented and/or spatially positioned to detect a sound signal input generated by noise within the noise reduction area.

The workspace wall can comprises a first sound detection element for detecting a first sound signal input and a second sound detection element for detecting a second sound signal input. The first sound detection element and the second sound detection element can be arranged at different spatial positions and/or orientations.

One of the first sound detection element and the second sound detection element can be arranged closer to the noise reduction area, in particular within the noise reduction area, than the other one of the first sound detection element and the second sound detection element.

The workspace wall can comprise a sound signal optimization unit which is configured to compare the first sound signal input and the second sound signal input and to calculate an optimized sound signal. The optimized sound signal includes one of the first sound signal input and the second sound signal input from which the other of the first sound signal input and the second sound signal input is at least partially subtracted.

At least one of the following group can be arrangeable or arranged in the spacing between the main wall element and the front panel:
- the at least one sound generating device,
- the at least one sound detection element,
- the sound signal optimization unit,
- a control unit which is designed to process the at least one sound signal input of the at least one sound detection element and/or transmit output sound signals to the at least one sound generating device.

The workspace wall can comprise an electronic interface which is connectable to an electronic terminal device of a user to enable power supply and/or data transmission, in particular data transmission from and/or to the sound generating device, sound detection element or the sound signal optimization unit.

The electronic interface can be wired to the electronic terminal device of a user in order to enable power supply to the electronic terminal device. The electronic interface can be configured to inductively charge an electronic terminal device.

The connection of the electronic terminal device of a user to the sound generating device, the sound detection element, the sound signal optimization unit, and/or the control unit can be established via the electronic interface.

The electronic interface can comprise a wireless receiving and/or transmitting element, in particular for establishing a connection by short-range radio waves at high frequencies above 1 GHz, in particular preferably via Bluetooth at 2.402 GHz to 2.480 GHz with the electronic terminal device.

The object is further solved by a workspace wall for placement on a desk in an operating orientation to reduce noise within a noise reduction area, in particular by a workspace wall as described above.

The workspace wall comprises at least one sound generating device for active noise reduction, at least one sound detection element for detecting a sound signal input, and at least one control unit. The control unit is configured to compute a suppression sound signal based on the sound signal input. The at least one sound generating device is configured to generate a suppression sound based on the suppression sound signal that results in at least partial destructive interference with sound within the noise reduction area.

The at least one sound generating device and the at least one sound detection element can be arranged at essentially the same three-dimensional spatial position. Thereby the at least partial destructive interference of the suppression sound signal can be optimized more effectively.

The workspace wall may comprise at least one position sensor for determining the two-dimensional and/or three-dimensional spatial position of a user relative to the workspace wall and/or the sound generating device.

The two-dimensional and/or three-dimensional position of the noise reduction area may be adjustable by adjustment of the spatial position and/or orientation of the sound generating device.

The position of the noise reduction area may also be adjustable by an input to the control unit which configures the computed suppression sound signal, such that the suppression sound of the sound generating device destructively interferes at a different spatial position. Thereby, the spatial position of the noise reduction area may be adjustable to different sized users and/or seating positions relative to the workspace wall or sound generating device. The noise reduction area can be adjusted based on the two-dimensional and/or three-dimensional spatial position of a user relative to the workspace wall and/or the sound generating device measured by a position sensor. The position sensor can in particular be a capacitive sensor, an optical sensor, in particular a laser sensor or camera sensor.

The noise reduction area can be adjusted based on the two-dimensional and/or three-dimensional spatial position of a user relative to the workspace wall and/or the sound generating device measured by the sound signal input detected by the at least one sound detection element. In particular said spatial position of a user relative to the workspace wall and/or the sound generating device can be measured by at least the first sound signal input detected by the first sound detection element and at least the second sound signal input detected by the second sound detection element.

The object is further solved by a workspace wall for placement on a desk in an operating orientation to reduce noise within a noise reduction area, optionally by a workspace wall as described above.

The workspace wall comprises at least two sound generating devices for active noise reduction, at least two sound detection elements for detecting at least two sound signal inputs at at least two different spatial positions and/or orientations and at least one control unit.

The at least one control unit is configured to distinguish between an internal sound signal generated by sound within the noise reduction area and an external sound signal generated by sound outside the noise reduction area by comparison of the at least two sound signal inputs.

The at least one control unit is configured to generate at least one suppression sound signal, preferably two different suppression sound signals, based on the external sound signal.

The at least two sound generating devices are configured to generate at least one suppression sound, preferably at least two different suppression sounds, based on the at least one suppression sound signal.

The suppression sound signal results in at least partial destructive interference within the noise reduction area with sound generated outside the noise reduction area.

The two sound detection elements can be arranged along a common spatial angle from the noise reduction area. The two sound detection elements can also be arranged within an angular range from the noise reduction area of a maximum of 30°.

One of the two sound detection elements can be placed at a greater distance along the common spatial angle or angular range from the noise reduction area than the other of the two sound detection elements.

The at least one control unit can be configured to distinguish between an internal sound signal generated by sound within the noise reduction area and a directional external sound signal generated by sound generated at a distance from the noise reduction area along the spatial angle or angular range by comparison of the at least two sound signal inputs. The at least one control unit can be configured to generate at least one directional suppression sound signal based on the directional external sound signal. The at least two sound generating devices can be configured to generate at least one directional suppression sound, preferably at least two different directional suppression sounds, based on the at least one directional suppression sound signal.

The directional suppression sound signal can result in at least partial directional destructive interference within the noise reduction area with sound generated outside the noise reduction area at a spatial angle.

The workspace walls described above can comprise multiple modes of operating.

The workspace walls can comprise a first mode, in which the control unit is configured to generate at least one maximum suppression sound signal based on the external sound signal. The at least one sound generating device can be configured to generate a maximum suppression sound based on the suppression sound signal that results in a maximum at least partial destructive interference with sound within the noise reduction area.

The workspace walls can comprise a second mode, in which the control unit is configured to generate at least one partial suppression sound signal based on at least one frequency range, optionally at least one frequency range of repeating sound or externally generated sounds, of the sound signal input.

The at least one sound generating device can be configured to generate the at least one partial suppression sound based on the at least one partial suppression sound signal that results in at least partial destructive interference with sound within the noise reduction area within the at least one frequency range.

The object is further solved by an air purifying device comprising a housing, at least one purifying unit arranged inside the housing, at least one air inlet, at least one air outlet, and at least one air circulation unit, in particular a fan.

The air circulating unit is configured for directing air through the air inlet into the housing, then through the at least one purifying unit and through the air outlet out of the housing.

In the operating orientation of the device,
at least one air inlet is arranged at the top section of the device and/or at least one air inlet is arranged at the bottom section of the device and
at least one air outlet is arranged at a side of the device.

Two air outlets can be arranged at two opposing lateral sides of the device in the operating orientation.

The at least one purifying unit can be selected from at least one of the group consisting of a dust filter, a high-efficiency particulate air filter (HEPA filter), an active carbon filter, an electrostatic filter, and an ultra violet (UV) purifier, in particular a UV-C purifier.

The air purifying device can comprise at least one sensor for determining at least one property of the air flowing in through the air inlet and/or flowing out through the air outlet.

The air purifying device can further comprise a control unit for controlling the operation of the at least one air circulation unit and/or at least one of the at least one purifying unit on the basis of the at least one property determined from the at least one sensor.

The at least one sensor can be arranged within the air inlet and/or the air outlet of the device.

The at least one sensor can be selected from at least one of a group consisting of a temperature sensor, a humidity sensor, a CO₂ sensor, a volatile organic compounds sensor (VOC sensor), a particulate matter sensor, an ambient noise sensor, and an ambient lighting sensor.

In the operating orientation of the air purifying device, the device can have a
- a height, as measured in the vertical direction, in the range from 30 cm to 55 cm, in particular 37.5 cm to 47.5 cm;
- a width, measured from a left side to a right side, in the range from 35 cm to 60 cm, in particular 42.5 cm to 52.5 cm;
- a depth, measured in a direction perpendicular to the height and the width, in the range from 5 cm to 9 cm, in particular 6 cm to 8 cm.

The at least one air inlet arranged at the bottom section of the device can be arranged to horizontally face away from one side of the air purifying device when in the operating orientation. The air inlet can optionally extend over a major width portion or the complete width of the air purifying device.

The air purifying device can comprise at least one of the group consisting of:
- a power supply, in particular an inductive power supply, connectable to additional electronic devices,
- wireless receiving and/or transmitting element,
- a sound detection element,
- a sound generating device, and
- an active and/or passive noise reduction element.

The air purifying device can comprise a control module, and optionally a wireless data receiving and/or transmitting interface. The control module can be configured for controlling the operation of the at least one air circulation unit and/or at least one purifying unit on the basis of a user input, optionally a wireless user input to the wireless data receiving interface.

The control module can comprise a storage medium for at least temporarily storing at least one property determined by the at least one sensor and the control module can be configured to display said at least one property by a visual display, preferably on a display.

The visual display of said at least one property can be based on a color coding scheme and/or an icon coding scheme which codes different subranges of said property to a certain color and/or icon.

The color coding scheme and/or the icon coding scheme can also be indicative of the speed at which the air circulation unit directs air from the air inlet to the air outlet of the housing.

The color coding scheme and/or the icon coding scheme can relate a discrete color and/or discrete icon to a continuous subrange of a measured property such as a temperature, humidity, CO₂ levels, volatile organic compounds level, particulate matter level, ambient noise level, or ambient light level.

The object is further solved by a desktop system comprising an air purifying device, in particular as described above. The air purifying device comprises a housing, at least one purifying unit arranged inside the housing, at least one air inlet, at least one air outlet, at least one air circulation unit, in particular a fan, for directing air through the air inlet into the housing, then through the at least one purifying unit and through the air outlet of the housing. In the operating orientation of the device, at least one air inlet is preferably arranged at the top section of the device and/or at least one air inlet is preferably arranged at the bottom section of the device and at least one air outlet is preferably arranged at a side of the device. The desktop system further comprises a workspace wall, in particular as described above, for placement on a desk to reduce noise within a noise reduction area in an operating orientation. The workspace wall comprises a main wall element, at least one wing panel, and at least one sound generating device, preferably for active noise reduction, and/or a passive noise reduction element. The at least one sound generating device and/or the passive noise reduction element is configured to reduce the level of noise within the noise reduction area.

The air purifying device of the desktop system can be provided in its operating orientation such that the air circulation unit and the at least one air outlet are arranged such that the air flowing out through the at least one air outlet flows essentially along a first horizontal direction. In addition, a passive air deflecting device can be arranged for deflecting the air flowing out through the at least one air outlet in an operating orientation from the first horizontal direction to a second essentially horizontal direction or an at least partially vertically downward direction that is arranged or arrangeable at an angle with respect to the first horizontal direction. The angle can preferably be in a range from 20° to 130°, in particular 80° to 110°.

The air purifying device of the desktop system can be arranged or arrangeable between the passive air deflecting device and a front panel, whereby the front panel optionally closes the housing and is removable to access the inside of the housing, in particular the at least one purifying unit.

The front panel can be arranged for deflecting the air flowing out through the at least one air outlet away from the left and right side of the air purifying device and can have a width measured from a left to a right side of the front panel in the operating configuration of at least 35 cm, in particular at least 42.5 cm, in particular preferably at least 47.5 cm.

The desktop system can comprise a passive noise reduction desk mat with a noise reduction layer which is arranged at along at least a partial surface of the noise reduction desk mat or the entire surface of the noise reduction desk mat. The noise reduction layer preferably consists of or comprises polyethylene and/or has a thickness of 8 mm to 30 mm, in particular 12 mm to 20 mm, in particular preferably 19 mm.

The noise reduction desk mat can be configured to cover a section or the complete surface of a desk.

The desktop system can comprise a noise reduction headrest extension for attachment to an existing headrest or replacement of an existing headrest in an installed condition which comprises at least one sound generating device for active noise reduction or a passive noise reduction element which comprises a noise reduction layer which is arranged along at least a partial surface of the noise reduction headrest extension or the entire surface of the noise reduction headrest extension.

The noise-reducing headrest extension may have a substantially concave or polygonal semi-open shape in which a user's head is supportable when the noise-reducing headrest extension is in the installed condition.

A noise reduction headrest extension, for being connected or connectable relative to a seat to actively reduce noise within a noise reduction area, can comprise at least one sound generating device for active noise reduction, at least one sound detection element for detecting a sound signal input and at least one control unit configured to compute a suppression sound signal based on the sound signal input. The at least one sound generating device can be configured to generate a suppression sound based on the suppression sound signal that results in at least partial destructive interference with sound within the noise reduction area.

A noise reduction headrest extension for active noise reduction is advantageous because the distance to a user can be minimized and the position of the user can be determined more precisely such that a broader frequency spectrum can be covered. In addition, the detected sound signal inputs of the sound detection elements are more similar to the sound perceived by the user due to the shorter distance.

Another advantage is that since the headrest extension can be connected or is connected to the seat and thus can be automatically moved by relative movement of the seat, such as an office chair. However, the user maintains essentially the same distance from the noise reduction headrest extension, regardless of the positioning of the seat, if the head rests in the partial enclosure of the headrest extension.

A noise reduction headrest extension, for being connected or connectable relative to a seat to actively reduce noise within a noise reduction area, can comprise at least two sound generating devices for active noise reduction, at least two sound detection elements for detecting at least two sound signal inputs at at least two different spatial positions and/or orientations. The noise reduction headrest extension can also comprise at least one control unit configured to distinguish between an internal sound signal generated by sound within the noise reduction area and an external sound signal generated by sound outside the noise reduction area by comparison of the at least two sound signal inputs and generate at least one suppression sound signal, preferably two different suppression sound signals, based on the external sound signal.

The at least two sound generating devices can be configured to generate at least one suppression sound, preferably at least two different suppression sounds, based on the at least one suppression sound signal that results in at least partial destructive interference within the noise reduction area with sound generated outside the noise reduction area.

The invention will now be described with reference to specific embodiments and the accompanying figures, which show:
- Figures 1A and 1B:: an oblique side view of an embodiment of a workspace wall for reducing noise within a noise reduction area and a system comprising a workspace wall,
- Figures 2A and 2B:: two oblique side views of an embodiment of a sound generating device to be used in a workspace wall or desktop system,
- Figure 3:: an oblique side view of an embodiment of a desktop system with a workspace wall which has a sound generating device for active noise reduction,
- Figures 4A to 4D:: schematic top views of a desktop system with a workspace wall with a single microphone and multiple microphones, respectively,
- Figure 5A:: an oblique side view of a desktop system with a passive noise reduction layer,
- Figures 5B to 5D:: cross-sectional views of different passive noise reduction layers of the wing panel, main wall element, and front panel of the workspace wall,
- Figure 6A:: a schematic top view of a workspace wall in an expanded configuration,
- Figure 6B:: a schematic top view of a workspace wall in a folded configuration,
- Figures 7A and 7B:: oblique side views of the workspace wall according to Fig. 6A and 6B,
- Figure 8A:: a semi-transparent oblique side view of an embodiment of an air purifying device,
- Figure 8B:: an exploded view of an embodiment of the purifying unit,
- Figure 9:: an embodiment of a desktop system comprising the air purifying device shown in Fig. 8A and 8B,
- Figures 10A and 10B:: oblique side views of two alternative wing panel embodiments of a workspace wall,
- Figure 11A:: an oblique side view of a desktop system with a passive noise reduction element,
- Figure 11B:: an oblique side view of a desktop system according to Fig. 11A with an air purifying device,
- Figure 12A:: an oblique side view of a desktop system with a passive noise reduction element and speakers for active noise reduction,
- Figure 12B:: an oblique side view of a desktop system according to Fig. 12A with an air purifying device,
- Figures 13A, 13B, and 13C:: oblique side views of three different embodiments of air purifying devices,
- Figure 13D:: an enlarged view of the visual display and user interface according to Fig. 13A and Fig. 13C,
- Figure 13E and 13F:: an oblique side view of a workspace wall and an alternative embodiment of a front panel to be attached to an air purifying device according to Fig. 13A,
- Figure 14A:: an oblique side view of a passive noise reduction mat,
- Figure 14B:: an oblique side view of a noise reduction headrest extension of the desktop system,
- Figure 14C:: an oblique side view of an active noise reduction headrest extension of the desktop system.

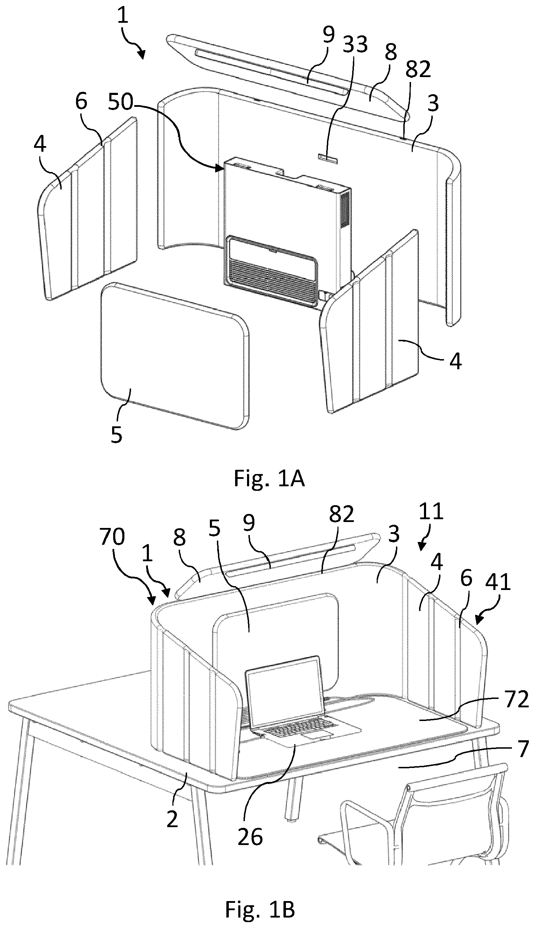

Fig. 1A shows the separate components of a workspace wall 1 and Fig. 1B shows a system 70 comprising the workspace wall 1 in an operating orientation 11 placed on a desk 2. The components in Fig. 1A of the workspace wall 1 are all connectable to each other such that they can be disassembled for transport and/or shipping.

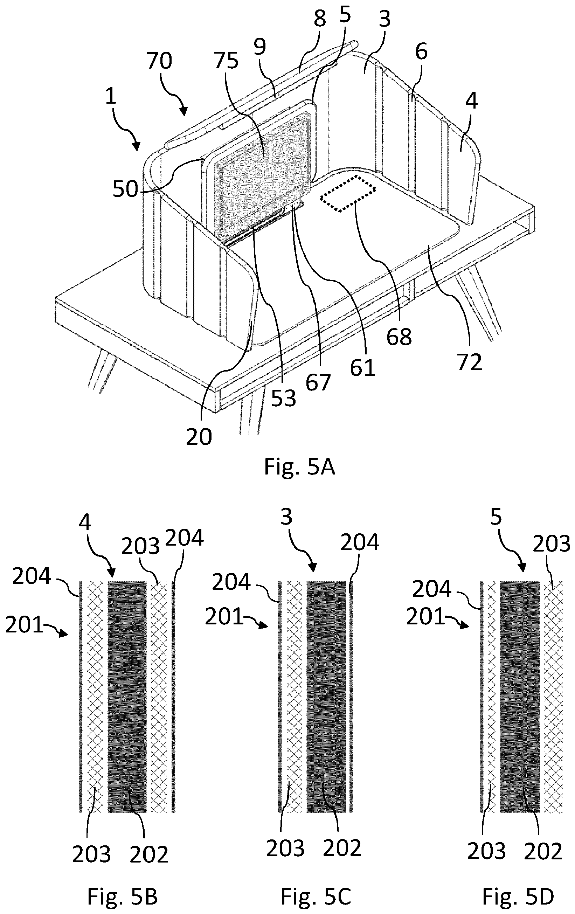

The workspace wall 1 has a main wall element 3 and two wing panels 4 which are attachable to the main wall element 3. The main wall element 3 is bent horizontally "c-shaped" at its lateral ends to partially enclose a noise reduction area in an operating orientation 11. The wing panels 4 can be received at the lateral ends of the main wall element 3. At a top section of the main wall element 3 a top panel 8 can be attached with two connecting elements 82 which allow for the adjustment of the inclination of the top panel 8 relative to the main wall element 3. The connecting elements 82 can have Velcro straps, zippers, magnets, press fasteners, and/or metal brackets to connect the top panel 8 to the main wall element 3. The top panel 8 further comprises a LED bar 9 which is arranged along the majority of the lateral width of the top panel 8 in an operating orientation 11 of the workspace wall 1. To ensure uniform illumination of the interior of the workspace wall 1, the LED bar 9 has a light diffuser made of a thermoplastic material that uniformly distributes the light (not shown in detail). The top panel 8 is arranged in such a way that it partially shields the workspace wall 1 from frontal noise and can provide light through the LED bar 9 without blinding a user. The workspace wall 1 components have a noise insulating layer which covers to shield a noise reduction area 7 passively from noise outside the workspace wall 1 (see Fig. 5A to 5D). In this embodiment, the noise reduction area 7 is defined by a seating area of the user. When the wing panels 4 are converted by folding the wing panel 4 at foldable portions 6 to an expanded configuration 41, they laterally partially enclose the workspace area at the desk 2. The height of the wall 1 measured in a vertical direction in the operating orientation 11 is large enough to shield the head of a user from noise.

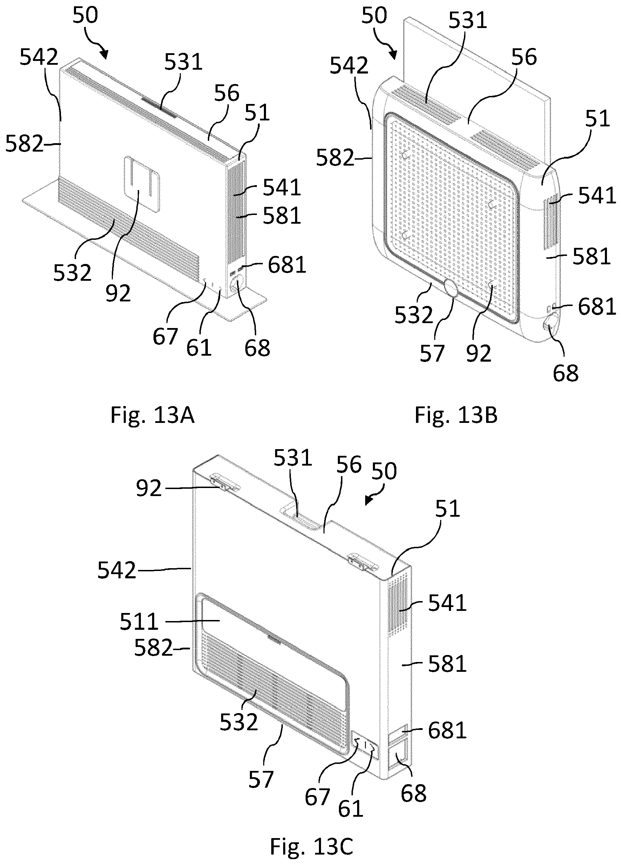

The wing panels 4 are protruding horizontally with increased vertical height. Thereby, the wing panels 4 protrude slightly relative to their base surface at the head level to reduce more noise at the seating position of the user within the noise reduction area 7. A laptop 26 of a user can be connected via a wire to the electronic interface and the electronic control unit of the workspace wall 1 which is arranged behind the front panel 5 together with the other electronic components of the workspace wall 1. The desk 2 is covered by a passive noise reduction desk mat 72 which can be used as mousepad. The workspace wall 1 can be adapted modularly to the needs of a user. Several workspace walls 1 can be arranged next to each other and for example only be separated by a common wing panel 4. An air purifying unit 50 (see Fig. 13A to 13C) can be mounted on a front side of the main wall element 3 by a connecting element 33.

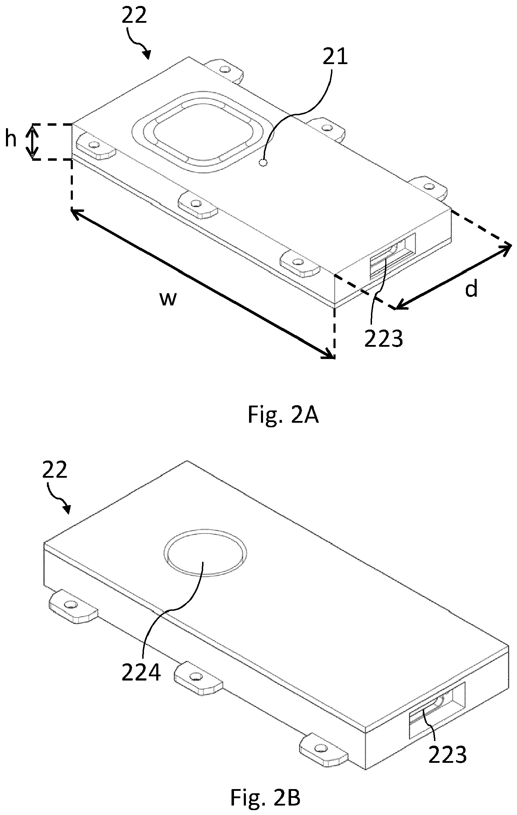

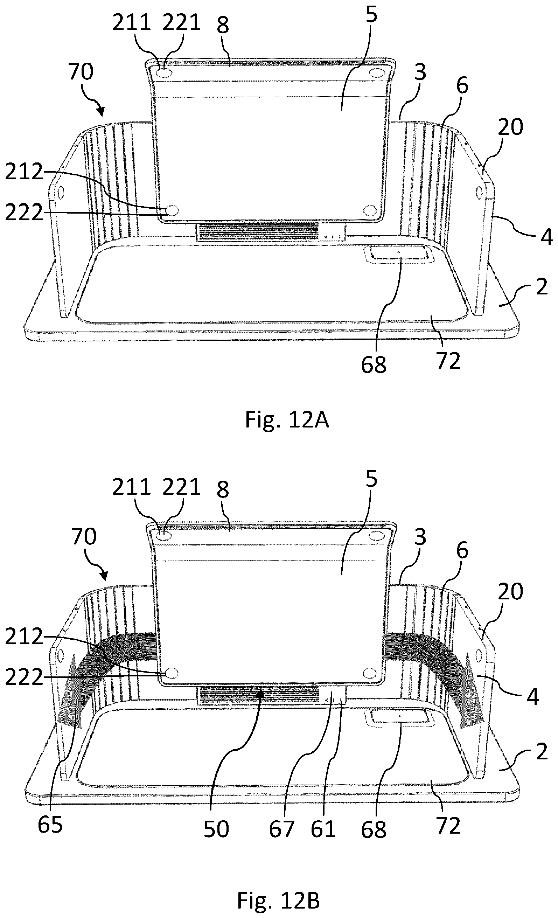

Figures 2A and 2B show a speaker 22 in two oblique side views. The speaker 22 is configured to be used with a workspace wall (see Fig. 1). The speaker 22 has a microphone 21 positioned centrally and has a width w of 180 mm, a height h of 20.6 mm, and a depth d of 80 mm. Due to the small height h, the speaker 22 can be arranged form-fittingly inlayed within a recess of the workspace wall without increasing the thickness of the workspace wall. Thereby, the speaker 22 and the workspace wall can form a smooth surface (see Fig. 12A and 12B). The speaker 22 further has an electric input and output 223 for receiving sound signals and transmitting sound signal inputs of the microphone 21. Thereby, the speaker 22 is connectable to the control unit, optimization unit and interfaces of the workspace wall and air purifying unit. A magnet 224 of the speaker 22 can be essentially flush with the surface of the back of the speaker 22 so that the speaker 22 can be shaped as thinly as possible.

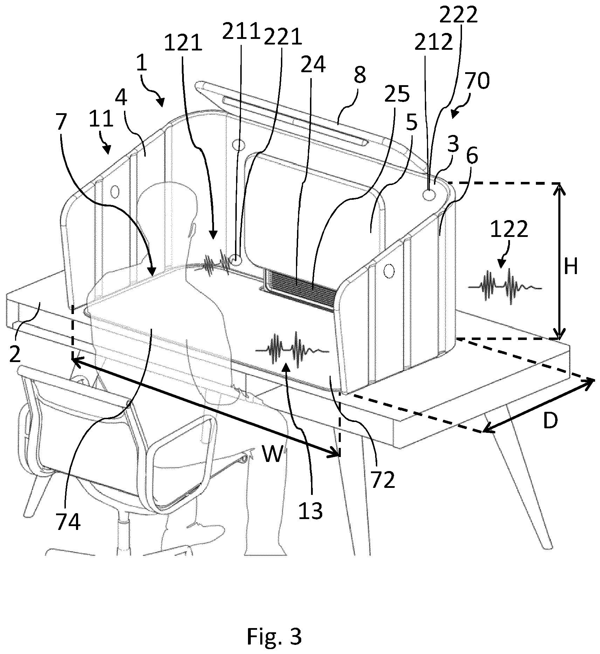

Figure 3 shows a desktop system 70 with a workspace wall 1 in the operating orientation 11, the workspace wall 1 consisting of a main wall element 3, a top panel 8 fixedly connected with a front panel 5, and two wing panels 4 with multiple foldable portions 6. The desktop system 70 in Fig. 3 is shown in a semi-transparent view so that all components can be identified.

The height H of the workspace wall 1 without the top panel 8 is 55 cm such that the noise reduction area 7 at head level of a user is shielded. The width W of the workspace wall 1 measured from one wing panel 4 to the opposite wing panel 4 is 180 cm. The depth D measured in a perpendicular direction of the height H and width W is 80 cm.

The workspace wall 1 has multiple speakers 221, 222 which are positioned at the wing panels 4 and the front panel 5 of the workspace wall 1 facing the noise reduction area 7 which is partially enclosed by the workspace wall 1. The workspace wall 1 also has multiple microphones 211, 212 functioning as sound detection elements which are preferably arranged at the same spatial positions as the speakers or at least in close proximity of or on the speakers 221, 222 (see Fig. 2A and 2B).

At least a first microphone 211 is directed at the user 74 such that the voice of the user 74 and in particular the sounds inside the workspace wall 1 can be recorded particularly well by recording a first sound signal input 121. At least a second microphone 212 is arranged at a different spatial position relative to the noise reduction area 7. Alternatively, the second microphone 212 can also be positioned on the outside of the surface of the workspace wall 1. Thereby, the second microphone 212 can better record a second sound signal input 122 and in particular undesirable background noise, such as the noise of a printer or fax machine, the buzzing of equipment, typing noises, traffic, ringtones, or voices of employees, generated outside the workspace wall 1. An optimization unit 24, mainly arranged in a housing behind the front panel 5, is configured to calculate an optimized sound signal by at least partially subtracting the second sound signal input 122 or a modified second sound signal input 122 from the first sound signal input 121. The optimized sound signal has less prominent undesirable background noise and can thereby increase the microphone 211, 212 recording quality.

The desktop system 70 can comprise multiple modes of operation which may be changed by operating a user interface (see Fig. 13A to 13D).

In another embodiment or mode of operation the microphone 211, 212 of the workspace wall 1 in Fig. 3 is configured to detect a sound signal input 121, 122 and transmit it to a control unit 25 arranged in a housing within a spacing between the front panel 5 and the main wall element 3.

This sound signal input 121, 122 is an overlay of sounds and includes some undesirable background noise. The control unit 25 can be configured to compute a suppression sound signal based on this sound input 121, 122. This suppression sound signal can be transmitted to the speakers 221, 222 to generate a suppression sound 13 which interferes at least partially destructively with undesirable background noise within the noise reduction area 7. Thereby, the user 74 within the noise reduction area 7 is not required to wear headphones and preferably can move freely within the noise reduction area 7. The spatial position of the noise reduction area 7 might even be adjusted by detecting the sitting position of a user 74 based on one or more distance measuring sensors (not shown in Fig. 3).

In particular sound at low frequencies with a large wavelength and/or repetitive sounds of undesirable noise is thereby reduced within the noise reduction area 7 for a user 74.

In another embodiment or mode of operation of the workspace wall 1 in Fig. 3, the first microphone 211 can be directed at a user 74 sitting within the noise reduction area 7. The noise reduction area 7 is defined by an area around possible head positions of the user 74 or a specific head position of the user 74. The first microphone 211 is configured to detect a first sound signal input 121 mainly capturing sound within the noise reduction area 7 or inside the workspace wall 1. The second microphone 212 is configured to detect a second sound signal input 122, mainly capturing sound which is generated external from the partial enclosure of the workspace wall 1. For the sake of clarity, the sound input signals 121, 122 were displayed with different oscillations in Fig. 3. However, both signals are always a superposition of external sound signal and an internal sound signal. The control unit 25 is configured to distinguish between the external noise signal and the internal noise signal by comparing the two sound input signals based on the sound reduction due to distance and orientation of the microphones 121, 122 and the noise reduction by dampening of the workspace wall 1. The control unit 25 generates a suppression sound signal by extracting the external sound signal from the sound input signals 121, 122 which is transmitted to speakers 221, 222. The control unit 25 can also generate multiple suppression sound signals which are transmitted to different speakers 221, 222 to account for the spatial position and/or orientation of the speakers 221, 222. Based on the suppression sound signal, the speakers 221, 222 generate a suppression sound 13 which destructively interferes with the external noise signal within the noise reduction area 7, in particular in the area of the ears of a user 74.

The user 74 may select different modes of operation for active noise reduction. The user 74 may choose from
- a mode for maximum sound suppression without discriminating to reduce sound within the noise reduction area 7 to a minimum, or
- a mode which filters at least one frequency range, indicative of the externally generated sounds or repetitive sound signals.

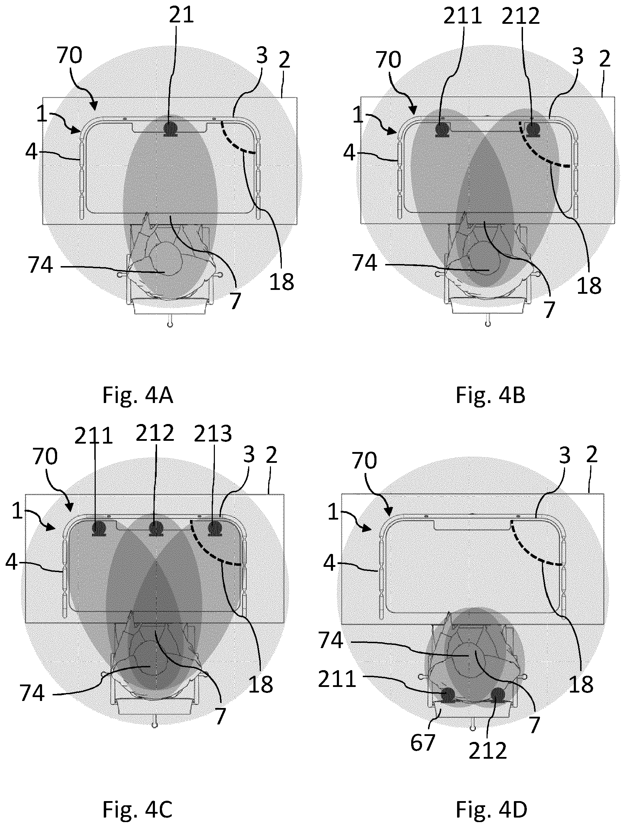

Figures 4A to 4D show schematic top views of the desktop system 70 with a workspace wall 1 which consists of a main wall element 3 and two sidewardly extending wing panels 4 which are arranged at an angle 18 of around 90° relative to the plane spanned by the main wall element 3. Figure 4A only shows a single microphone 21 which is placed centrally within the partial enclosure of the workspace wall 1. Figure 4B shows two microphones 211, 212 which are arranged within the partial enclosure of the workspace wall at different spatial positions relative to a user 74. Figure 4C shows multiple microphones 211, 212, 213 which are arranged at different spatial positions within the partial enclosure of the workspace wall 1. In Fig. 4C one microphone 212 is arranged closer to the noise reduction area 7 to record a second sound signal input generated to a large extent by sound within the noise reduction area 7 particularly well. Another microphone 211 is located at an offset spatial position within the enclosure of the workspace wall 1. Therefore, the offset microphone 211 records a first sound signal generated to a lesser extent by sound generated closer to the noise reduction area 7. However, additional external sounds, i.e. above-mentioned undesirable background noise, is recorded by the first and second sound signal inputs of both microphones 211, 212. Thereby, the undesirable background noise can be identified by comparing the first and second sound signal inputs. The background noise can be better identified by additionally detected sound signal inputs from additional microphones 213 exemplary shown in Fig. 4C. The inputs are transmittable to an optimization unit or a control unit to be further processed (see Fig. 3). The optimization unit is configured to compute an optimized sound signal by partially subtracting the first sound signal input, in particular the undesirable background noise, from the second signal input.

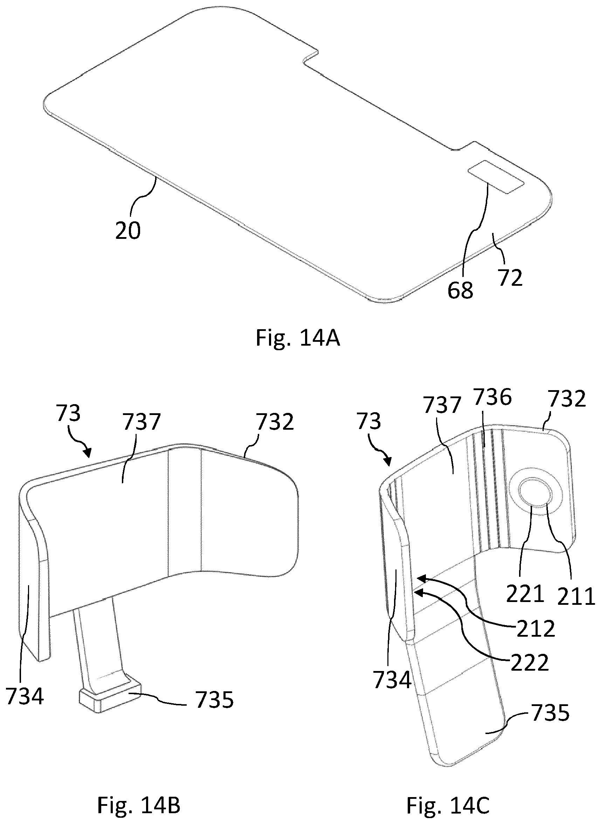

The optimized sound signal can be further transmitted via an interface to an external terminal device such as a computer or smartphone. Alternatively or additionally, the microphones 211, 212 and preferably the speakers Fig. 4D can be placed within a headrest extension 67 (see Fig. 14C) as shown in Fig. 4D. The at least two microphones 211, 212 according to Fig. 4A to Fig. 4C can be used for determining the three-dimensional spatial position of the user 74 based on at least a first sound signal input and a second sound signal input, e.g. when the user speaks. The noise reduction area 7 can be spatially adjusted such that the user 74 is always positioned essentially centrally within the noise reduction area 7 based on the determined three-dimensional spatial position of the user 74.

The control unit can be configured to further compute a suppression sound signal for generating a suppression sound based on the first and second sound signal inputs of the two microphones 211, 212 (see Fig. 3). The optimization unit and the control unit are configured to remove repetitive sounds and/or noises at low frequencies, in particular below 500 Hz, in particular preferably below 100 Hz, of the first and second sound signal inputs when computing the optimized sound signal or suppression sound signal or signals.

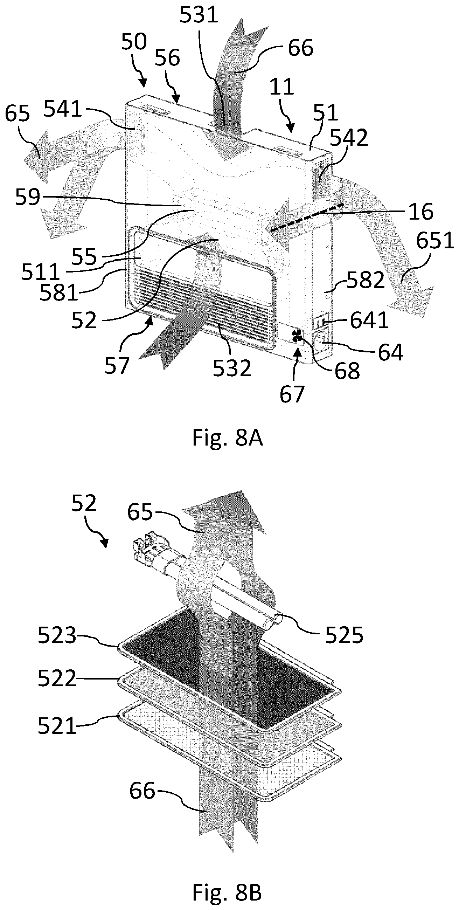

Figure 5A shows an oblique view of a desktop system 70 with a workspace wall 1 that has a passive noise reduction element 20 forming noise reduction layers made of multiple layers (see Fig. 5B to 5D) within the main wall element 3, the front panel 5, the top panel 8, and the wing panels 4. All electronic components of the desktop system 70 including an optimization unit, a control unit, and an air purifying device (see Fig. 8A and 8B) are arranged in a common housing within a spacing between the front panel 5 and the main wall element 3. At the bottom section of said housing, an air inlet 53 of the air purifying device 50 and a visual display 67 is arranged. The visual display 67 can be configured to display a property, for example the temperature, humidity, CO₂ level, volatile compound level, particulate matter level, ambient noise level, or ambient light level based on the measurements of respective sensors arranged within the housing. The visual display 67 is configured such that icons, i.e. a thermometer or a fan, changes by selecting a property, i.e. temperature or ventilation speed (see Fig. 8A). The visual display 67 further changes the display color in accordance with the value of the measured property.

The user can adjust the mode of operation of the active noise reduction and/or the air purifying device by capacitive touch sensors 61. Additionally or alternatively, the user can connect wirelessly to a wireless data transmitting interface arranged within the housing behind the front panel 5. In addition, an electronic device, in particular a smartphone can be inductively charged by an inductive power supply 68 arranged on a section of the noise reduction mat 72. The front panel 5 is adjusted to receive a monitor 75 on its front side.

Figures 5B to 5D show cross-sectional views of the wing panels 4 in Fig. 5B, of the main wall element 3 in Fig. 5C, and of the front panel 5 in Fig. 5C. In Fig. 5B, the noise reduction layer 201 of the wing panel 4 is enclosed on each side by a covering fabric 204. Within each covering fabric 204, two layers of sound absorbing foam 203 are arranged which enclose a single layer of sound absorbing PET 202. The single layer of sound absorbing PET 202 has a thickness of 19 mm. The sound absorbing foam 203 has a periodic pyramidal three-dimensional structure to attenuate noise further.

The main wall element 3 in Fig. 5C is also covered on each side by a covering fabric 204 which encloses a single sound absorbing foam layer 203 on one side and a single layer of sound absorbing PET 202 on the other side. The front panel 5 in Fig. 5D also only has a single covering fabric 204 on one side which covers a thin foam layer 203 followed by a sound absorbing PET layer 202 and a broader foam layer 203. The noise reduction mat 72 in Fig. 5A also has an above described a noise reduction layer 201.

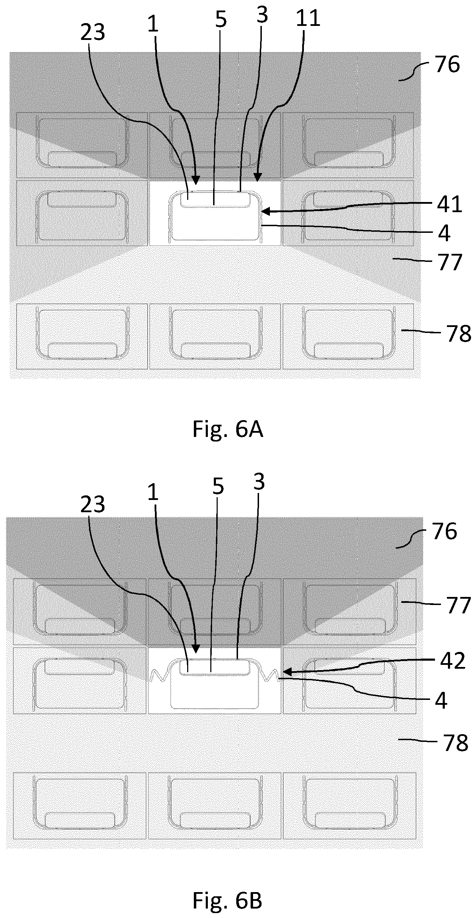

Figure 6A shows a schematic top view of a workspace wall 1 which is arranged adjacent multiple other workspace walls 1 in an office in an expanded configuration 41. In the expanded configuration 41, the wing panels 4 of the workspace wall 1 in the operating orientation 11 extend in a second horizontal direction from a first horizontal direction of the main wall element 3 at an angle of 90°. A front panel 5 is arranged distanced at a spacing 23 from the front facing side of the main wall element 3, facing a seating position of a user. The wing panels 4 of the workspace wall 1 in the operating orientation 11 can be folded in a zig-zag pattern/concertina pattern with alternating fold directions for every single foldable portion.

Thereby, the workspace is partially enclosed and the workspace wall 1 reduces the noise within the workspace wall 1 from a large area 76 behind the workspace wall 1 and a lateral area 77. Thereby, in the expanded configuration 41, the area 78 from which noise reaches the workspace can be reduced by converting the wing panels 4.

However, the wing panels 4 of the workspace wall 1 in the folded configuration in Fig. 6B allow for lateral communication. The wing panels 4 can be converted from the expanded configuration 41 to the folded configuration 42 and vice versa manually to adjust the workspace environment to the individual needs of a user.

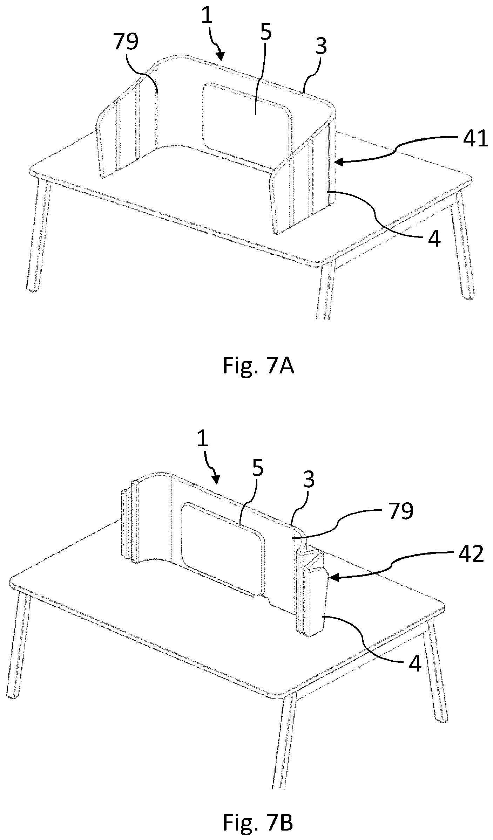

Figures 7A and 7B respectively show oblique side views of the expanded configuration 41 of the wing panels 4 and the folded configuration 42 of the wing panels 4 according to Fig. 6A and 6B. A front panel 5 is attached to the main wall element 3 or to a housing for the electronics (see Fig. 13A - 13C) on a front facing side of the partial enclosure. In this embodiment, the wing panels 4 are connected to the main wall element 3 via two zippers 79. This allows for a modular combinability to adjust the workspace wall 1 to the workspace environment. In particular, multiple main wall elements 3 are connectable to other main wall elements 3 (not shown in the figures).

Figure 8A shows an embodiment of an air purifying device 50 in an operating orientation 11. A housing 51 of the air purifying device 50 has two air outlets 541, 542 on two opposite horizontally facing sides 581, 582 of the housing 51. A first air inlet 531 is arranged at the top section 56 of the housing 51 and a second air inlet 532 is arranged at a bottom section 57 of the housing 51. A second air inlet 532 at the bottom section 57 faces horizontally outward. Thereby, the second air inlet 532 can easily take in the breathing air of a user sitting frontally to the second air inlet 532. However, in a different embodiment of the air purifying device 50 which is placed fixed in an elevated position, the second air inlet 532 may also be placed on the bottom facing side of the housing 51. An inflow of air 66 is directed through the air inlets 531, 532 by multiple fans 55 behind a removable opening panel 511, through a purifying unit 52 which comprises multiple different filters (see Fig. 8B) and then through the air outlets 541, 542. The inflowing air 66 essentially enters the housing 51 in a vertical direction. The outflowing air 65 discharged from the housing 51 is directed essentially along a horizontal direction 16 away from the opposing sides 581, 582 of the housing 51. Alternatively, the outflowing air 651 can be guided at least partially vertically downward in an operating orientation 11 of the air purifying unit 50. This can be achieved by an inclined internal guiding surface and/or directed fans 55. The air purifying device 50 further comprises a power socket 64, cable ports, and USB ports 641. A visual display 67 of the air purifying unit 50 is configured to display icons 68 according to the settings of the ventilation mode. The purifying unit further has a sensor 59 to measure a temperature, a humidity, a CO₂ level, a volatile organic compounds level, a particulate matter level, a noise level and/or an ambient light level of the inflowing air 66 which is arranged within the air inlet 532. The measures values of the sensor 59 can be displayed on the visual display 67 or used to adjust the settings of the air purifying unit, in particular the fan speed. Figure 8B further shows that the inflowing air 66 is guided through a dust filter 521, a HEPA filter 522, an active carbon filter 523, and a UV purifier 525. The flow of air can be redirected around the UV purifier 525 at least once such that sufficient radiation to kill pathogens is applied to the flow of air. Thereby, potentially harmful substances and pathogens of the inflowing air 66 are filtered out and/or killed such that the outflowing air 65 is safe.

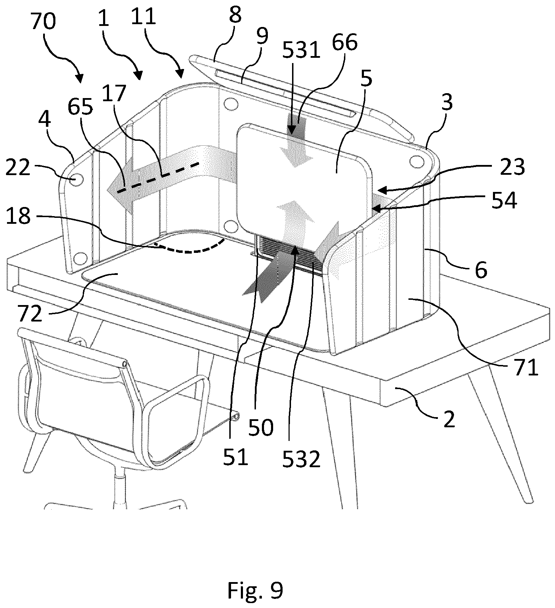

Figure 9 shows an embodiment of the desktop system 70 comprising an air purifying device 50 which is arranged within a spacing 23 between a front panel 5 and a main wall element 3 of a workspace wall 1 in an operating orientation 11. In this operating orientation 11, the workspace wall 1 is placed on a desk 2 at a workspace with a rubber coating of the base area of the workspace wall 1 contacting the surface of the desk 2. The base of the workspace wall 1 is partially bent forming a half-open cavity facing the noise reduction area at the sitting area with the open side. The front panel 5 is removably attached to the air purifying device 50 and can be removed to open the housing of the device 50. The front panel 5 is fixedly connected with a top panel 8 with an LED bar 9 which is arranged at an inclination 81 relative to the front panel 5. The workspace wall 1 further comprises two wing panels 4 which are arranged at either lateral ends of the main wall element 3 and are fixedly connected with the wall element 3. The two wing panels 4 comprise foldable portions 6 which allow adjusting the angle 18 of the wing panels 4 relative to the main wall element 3 by folding the wing panels 4 horizontally outward/inward. At the lower section of a housing 51 of the air purifying unit 50 located behind the front panel 5 is a first inlet 532 and at its top section is a second inlet 531 for inflowing air. The workspace wall 1 serves as an air deflecting device 71, deflecting the discharged air 65 from a first horizontal direction 16 to a second horizontal direction 17 at the angle 18 at which the wing panels 4 are arranged. The deflected air flow 65 is preferably essentially directed to supply a user of the system 70 with purified outflowing air 65. In addition, the user is shielded by the air flow 65 along the horizontal direction 17 on both lateral sides of the user from external un-purified air. The wing panels 4, the front panel 5, and the top panel 8 have speakers 22 which are directed at a seating area of the user at the desk 2. The speakers 22 can be used for active noise reduction within a noise reduction area at the seating position of the user (see Fig. 3, Fig. 4A to 4D). The workspace wall 1 and a noise reduction desk mat 72 of the system 70 comprise a passive noise reduction element to reduce noise within the workspace wall 1 (see Fig. 5A, Fig. 5B and Fig. 14A) .

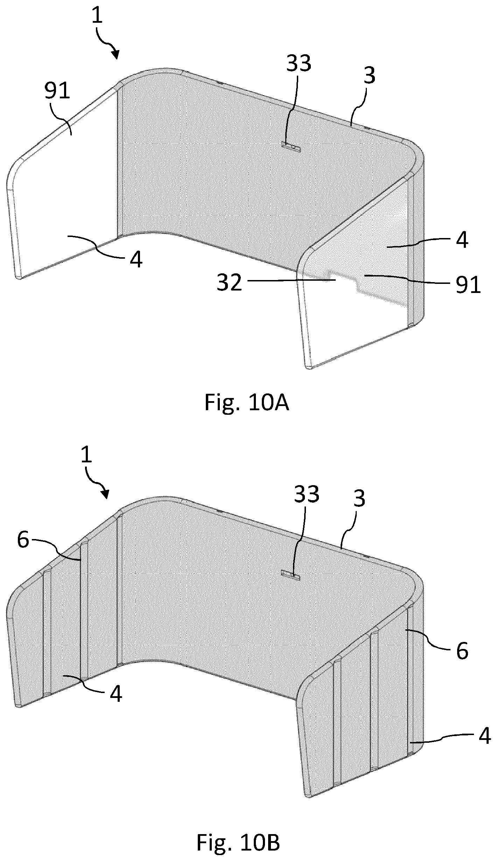

Figures 10A and 10B show two alternative embodiments of wing panels 4 respectively connected to the main wall element 3 of a workspace wall 1. The wing panels 4 in the upper embodiment comprise a proximal section 91 which is made of semi-transparent material, in particular polymethylmethacrylate. Such wing panels 4 prevent a user from feeling confined, still allow contact with neighboring people, and contribute to the passive noise reduction within the partial confinement of the workspace wall 1. The main wall element 3 in Fig. 10A and Fig. 10B has a recess 32 for guiding cables and a connecting element 33 for receiving a monitor, an air purifying unit, or a front panel.

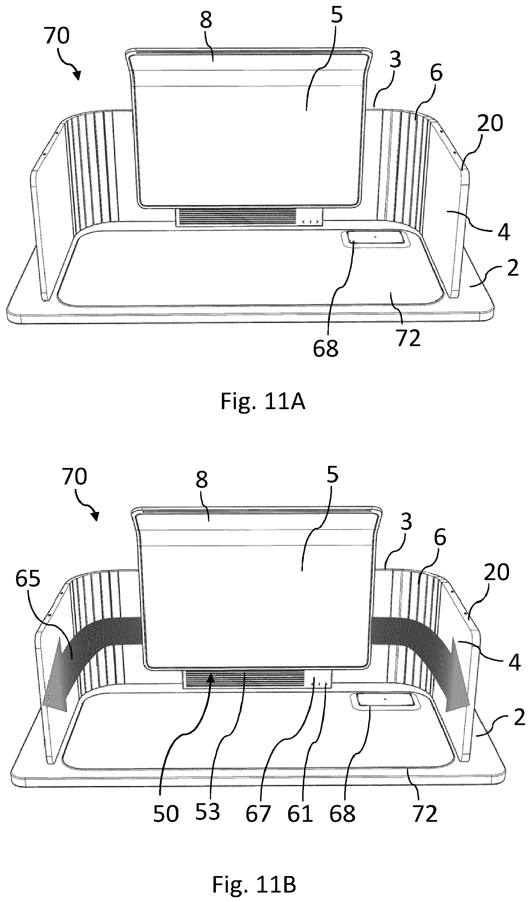

Figure 11A shows an oblique side view of a desktop system 70 with a workspace wall having a passive noise reduction element 20 being placed on a desk 2 with a passive noise reduction mat 72 and wing panels 4 which are folded at foldable sections 6 to enclose the workspace and in particular a noise reduction area.

Figure 11B shows an oblique side view of a desktop system 70 according to Fig. 11A with a top panel 8 and an air purifying device 50 which is partially arranged in a spacing behind the front panel 5. The main wall element 3 and the wing panels 4 deflect the outflowing air 65 of the air purifying device to a user sitting at the noise reduction area. The air essentially circulates around a user sitting at the desk 2 in front of the workspace wall and thereby shielding a user from breathing air which has not been purified. The air inlet 53 is arranged facing a sitting position of a user such that the air a user breathes out is mostly directly purified. Electronic devices can be charged on an inductive power socket 68 and are wirelessly connectable to a control module which is located in the spacing behind the front panel 5. Electronic devices 26 can be connected wirelessly to a control unit behind the front panel to select a mode of operation of the purifying unit 50. The visual display 67 provides a user with information about the status, mode, or a measured property, depending on the selected settings and can be operated by capacitive switches 61.

Figures 12A and 12B respectively show alternative embodiments of a desktop system 70 with a workspace wall according to Fig. 11A and 11B with additional speakers 221, 222 and microphones 211, 212 for active noise reduction according to Fig. 3. The speakers 221, 222 and microphones 211, 212 can be arranged spatially at the same position or separately from each other. The mode of operation for e.g. level of active noise reduction can be set via wireless input via Bluetooth connected terminal devices such as smartphones, tablets or laptops. The terminal devices can be connected to a receiving or transmitting interface on the control unit within the housing of the air purifying unit 50.

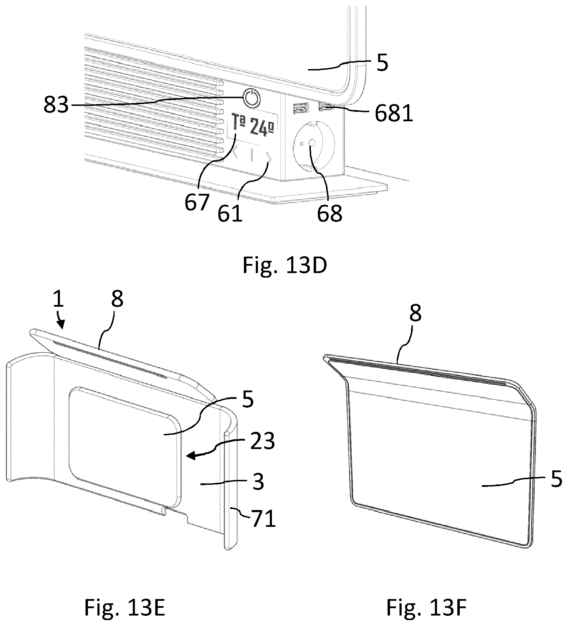

Figure 13A, 13B and 13C show an oblique side view of three different embodiments of an air purifying device 50. The housing 51 has two air outlets 541, 542 at its lateral sides 581, 582 and two air inlets 531, 532 at the top section 56 and bottom section 57. The air inlets 531, 532 in Fig. 13B are arranged on the top facing side of the housing and the bottom facing side of the housing 51. The housings 51 in Fig. 13A, 13B and 13C have connecting elements 92 to removably attach a front panel (see Fig. 13E and 13F). In addition, the housing 51 in Fig. 13A has a charging socket 68 and a port 681 with USB for connecting electric terminals of a user. The housing 51 in Fig. 13A further has a visual display screen 67, capacitive switches 61 to change the displayed visual property of the visual display screen 67 or the mode of operation of the air purifying device 50 or active noise reduction system. The purifying unit comprising the filters and the electronic components are arranged completely within the housing 51. The air purifying device 50 in Fig. 13C has an opening panel 511 located on the front facing side which is removable to access the interior of the housing 51 and the electronic components and/or purifying unit. The connecting elements 92 in Fig. 13C are positioned on the top section 56 such that a front panel can be easily connected or removed.

Figure 13D shows an enlarged oblique side view of the electronic interface of the air purifying device. The visual display screen 67 can be configured for displaying a property and/or an icon by operating capacitive switches 61 (see Fig. 5A). The mode of operation of the air purifying unit can also be adjusted by the capacitive switches 61. The LED bar of the top panel (see Fig. 3) can be operated by a switch 83 above the visual display screen 67. USB ports 681 and a power socket 68 can be used for connecting and charging electronic terminals. Fig. 13E shows an oblique side view of a workspace wall 1 with a front panel 5 behind which the air purifying unit can be placed within a spacing 23 distancing the front panel 5 from the main wall element 3. The laterally curved areas 71 of the workspace wall 1 serve to direct the outflowing air towards a user. Fig. 13F shows an alternative embodiment of a front panel 5 connected with a top panel 8 which can cover the air purifying unit.

Figure 14A shows an oblique side view of a passive noise reduction mat 72 which comprises a noise reduction element 20 in form of multiple noise reduction layers (see Fig. 5B). The noise reduction mat 72 has a smooth surface texture so that it can be used as a mouse pad and also has an area 68 in which a device, in particular a smartphone or tablet, can be inductively charged.

Figure 14B shows an oblique side view of a noise reduction headrest extension 73 of a desktop system. The headrest extension 73 has a noise reduction layer 732 which extends over the entire headrest extension 73. Thereby, the headrest extension 73 further decreases the noise within a noise reduction area at the head position of a user. The headrest extension 73 has two lateral elements 734, which are arranged at an angle to a main element 737 of the headrest extension 73 for receiving the head of a user and shielding the ears of a user from noise further. The headrest extension 73 includes a metal clip 735 which allows replacing the headrests of existing desk chairs or attaching the headrest extension 73 to desk chairs without headrests.

Figure 14C shows an oblique side view of an active noise reduction headrest extension 73 of a desktop system. The headrest extension 73 has two lateral elements 734 arranged at an adjustable angle relative to a main element 737 of the headrest extension 73. The angle can be adjusted by foldable sections 736 connecting the main element 737 and the lateral element 734 of the headrest extension 73. A first speaker 221 and a second speaker 222 are arranged on the lateral elements 734, in particular at a position relatively close to a head resting position of a user. In addition, the speakers 221, 222 include integrated microphones 211, 212. Placement of the speakers 221, 222 on the lateral elements 734 facing the ear of a user allows for an improved active noise reduction analogous to the active noise reduction described in relation to Fig. 3. The headrest extension 73 has a protruding connection area 735 at the lower end in an operational configuration which is fixable in a bracket of a seat.

The position of the user within the headrest extension 73 can be determined more precisely due to being partially enclosed by the lateral elements 734 and thereby more confined to a partial enclosure of the headrest 73. The frequency of the noise reduction signals can also be adjusted more exactly due to the shorter distance between the transmitter, specifically the speakers 221, 222, and the receiver, specifically the ears of the user.

## Claims

1. Workspace wall (1) for placement on a desk (2) to reduce noise within a noise reduction area (7) in an operating orientation (11),
the workspace wall (1) comprising a main wall element (3), at least one wing panel (4),
optionally at least one sound detection element (21) for detecting a sound signal input (12), and
at least one sound generating device (22), preferably for active noise reduction, and/or a passive noise reduction element (20), **characterized in that** the at least one sound generating device (2) and/or the passive noise reduction element (20) is configured to reduce the level of noise within the noise reduction area (7).

2. Workspace wall (1) according to claim 1, wherein the at least one wing panel (4) comprises at least one of the following:
- at least one foldable portion (6) such that the wing panel (4) is convertible between an expanded configuration (41) and a folded configuration (42);
- a connecting element (43) such that the wing panel (4) is connectable to the main wall element (3).

3. Workspace wall (1) according to one of the preceding claims, wherein the workspace wall (1) comprises a front panel (5) which is connected or connectable to the main wall element (3) facing the noise reduction area (7) forming a spacing (23) between the main wall element (3) and the front panel (5) .

4. Workspace wall (1) according to one of the preceding claims, wherein the workspace wall (1) comprises a top panel (8) which is connected or connectable to a top section (31) of the main wall element (3) and/or the front panel (5), preferably at an angle relative to the main wall element (3) and/or the front panel (5), and the top panel (8) optionally has a light source (9) facing away from a surface of the top panel (8) .

5. Workspace wall (1) according to any one of the preceding claims,
wherein in the operating orientation (11) of the workspace wall (1), the workspace wall (1) has
- a height H, as measured in the vertical direction, in the range from 30 cm to 300 cm, in particular 50 cm to 150 cm, in particular preferably 50 cm to 70 cm;
- a width W, measured from a left side to a right side, in the range from 90 cm to 800 cm, in particular 120 cm to 250 cm, in particular preferably 120 cm to 180 cm;
- a depth D, measured in a direction perpendicular to the height and the width, in the range from 30 cm to 110 cm, in particular 60 cm to 80 cm.

6. Workspace wall (1) according to any one of the preceding claims, wherein the passive noise reduction element (20) is a noise reduction layer (201) which is arranged along at least a part of a surface of the workspace wall (1) or the entire surface of the workspace wall (1) and
preferably consists of or comprises polyethylene and/or has a thickness of 8 mm to 30 mm, in particular 12 mm to 20 mm, in particular preferably 19 mm.

7. Workspace wall (1) according to any one of the preceding claims, wherein the workspace wall (1) comprises a first sound detection element (211) for detecting a first sound signal input (121) and a second sound detection element (212) for detecting a second sound signal input (122), wherein the first sound detection element (211) and the second sound detection element (212) are arranged at different spatial positions and/or orientations.

8. Workspace wall (1) according to claim 7, wherein the workspace wall (1) comprises a sound signal optimization unit (24) which is configured to compare the first sound signal input (121) and the second sound signal input (122) and to calculate an optimized sound signal which includes one of the first sound signal input (121) and second sound signal input (122) from which the other of the first sound signal input (121) and second sound signal input (122) is at least partially subtracted.

9. Workspace wall (1) for placement on a desk (2) in an operating orientation (11) to reduce noise within a noise reduction area (7),
in particular according to any one of the preceding claims, wherein the workspace wall (1) comprises at least one sound generating device (22) for active noise reduction,
at least one sound detection element (21) for detecting a sound signal input (12) and
at least one control unit (25) configured to compute a suppression sound signal based on the sound signal input (12), wherein
the at least one sound generating device (22) is configured to generate a suppression sound (13) based on the suppression sound signal that results in at least partial destructive interference with sound within the noise reduction area (7).

10. Workspace wall (1) for placement on a desk (2) in an operating orientation (11) to reduce noise within a noise reduction area (7),
in particular according to any one of the preceding claims, wherein the workspace wall (1) comprises
- at least two sound generating devices (221, 222) for active noise reduction,
- at least two sound detection elements (21) for detecting at least two sound signal inputs (121, 122) at at least two different spatial positions and/or orientations, and
- at least one control unit (25) configured to
- distinguish between an internal sound signal generated by sound within the noise reduction area (7) and an external sound signal generated by sound outside the noise reduction area (7) by comparison of the at least two sound signal inputs (121, 122) and
- generate at least one suppression sound signal, preferably two different suppression sound signals, based on the external sound signal,
wherein the at least two sound generating devices (221, 222) are configured to generate at least one suppression sound (13), preferably at least two different suppression sounds, based on the at least one suppression sound signal that results in at least partial destructive interference within the noise reduction area (7) with sound generated outside the noise reduction area (7).

11. Air purifying device (50) comprising
- a housing (51),
- at least one purifying unit (52) arranged inside the housing (51),
- at least one air inlet (53),
- at least one air outlet (54),
- at least one air circulation unit, in particular a fan (55), for directing air through the air inlet (53) into the housing (51), then through the at least one purifying unit (52) and through the air outlet (54) out of the housing (51),
**characterized in that**
in an operating orientation of the device (50),
- at least one air inlet (53) is arranged at the top section (56) of the device (50) and/or at least one air inlet (53) is arranged at the bottom section (57) of the device (50) and
- at least on air outlet (53) is arranged at a side (58) of the device (50).

12. Air purifying device (50) according to claim 11,
wherein the at least one purifying unit (52) is selected from at least one of the group consisting of
- a dust filter (521),
- a HEPA filter (522),
- an active carbon filter (523),
- an electrostatic filter and
- a UV purifier (525), in a particular UV-C purifier.

13. Air purifying device (50) according to any one of the claims 11 and 12,
wherein the device (50) further comprises at least one sensor (59) for determining at least one property of the air flowing in through the air inlet (53) and/or flowing out through the air outlet (54).

14. Air purifying device (50) according to claim 13,
wherein the device (50) further comprises a device control unit (60) for controlling the operation of the at least one air circulation unit and/or at least one of the at least one purifying unit (52) on the basis of the at least one property determined from the at least one sensor (59).

15. Desktop system (70) comprising
- an air purifying device (50), in particular according to any one of the claims 11 to 14,
comprising a housing (51), at least one purifying unit (52) arranged inside the housing (51), at least one air inlet (53), at least one air outlet (54), at least one air circulation unit, in particular a fan (55), for directing air through the air inlet (53) into the housing (51), then through the at least one purifying unit and through the air outlet (54) out of the housing (51), wherein in an operating orientation of the device (50), at least one air inlet (53) is preferably arranged at the top section (56) of the device (50) and/or at least one air inlet (53) is preferably arranged at the bottom section (57) of the device (50) and
at least one air outlet (54) is preferably arranged at a side of the device (50)
and
- a workspace wall (1), in particular according to any one of the claims 1 to 10, for placement on a desk (2) to reduce noise within a noise reduction area (7) in an operating orientation (11),
comprising a main wall element (3), at least one wing panel (4) and
at least one sound generating device (22), preferably for active noise reduction, and/or a passive noise reduction element (20), wherein
the at least one sound generating device and/or the passive noise reduction element (20) is configured to reduce the level of noise within the noise reduction area (7).
